# DEMANDE DE BREVET EUROPEEN

(11) **EP 2 354 718 A2**
(43) Date de publication de la demande: **10.08.2011**
(21) Numéro de dépôt: 10164176.9
(22) Date de dépôt: 27.05.2010
(51) Int. Cl.: F24J 2/52, H01L 31/042

(54) **Bloc d'intégration pour module à énergie solaire et toiture comprenant de tels blocs**

(30) Priorité: 04.02.2010 CN 201020107541 U
(71) Demandeur: Solergie (Qingdao) Renewable Energy Co., Ltd., Qingdao 266229 (CN)
(72) Inventeur: Dubreuil, Andre, 266071 Qingdao (CN)
(74) Mandataire: Pichat, Thierry

(57) **Abrégé**

Est concerné un bloc d'intégration pour module à énergie solaire comportant un module à énergie solaire et des composants d'assemblage lesquels comprennent un profilé de cadre avant (1), un profilé de cadre arrière (7) et deux profilés de montants latéraux de cadre (2), adaptés à être assemblés de manière à former un cadre rectangulaire ; à la partie supérieure et intérieure desdits profilés de cadre avant (1) et arrière (7) se trouve une glissière de montage (11) pour l' insertion du module à énergie solaire. Des gorges (71) de glissières de montage (11) sont ainsi disposées qu'une face extérieure dudit profilé de cadre avant (1) possède un encastrement avant (12) orienté vers le bas, une face extérieure dudit profilé de cadre arrière (2) possède un encastrement arrière (72) orienté en sens inverse de l'encastrement avant (12), de sorte que l'encastrement avant (12) d'un dit composant d'assemblage s'adapte de manière complémentaire à l'encastrement arrière (72) d'un composant d'assemblage voisin.

## Description

### Domaine technique

Le présent brevet concerne un bloc d'intégration pour modules à énergie solaire et en particulier la structure des composants d'assemblage d'un tel bloc, ainsi que la toiture comprenant ces blocs d'intégration.

### Etat de la technique

Un système de production d'électricité photovoltaïque comprend plusieurs modules à énergie solaire, lesquelles modules comprennent des composants qui transforment l'énergie solaire en énergie électrique et des composants d'assemblage, parmi lesquels composants d'assemblage notamment un profilé pour le cadre avant, un profilé pour le cadre arrière et deux profilés pour les montants latéraux du cadre, formant ensemble un cadre rectangulaire. La section transversale des différents profilés des composants d'assemblage traditionnels est généralement en forme de L et une fois assemblés ensemble, toutes leurs faces vues de l'extérieur sont planes. Communément afin de recevoir le maximum d'énergie lumineuse, on installe les modules à énergie solaire sur des toitures convenablement exposées au soleil. Lors de l'installation des modules sur la toiture, il faut d'abord installer une couche d'étanchéité, puis utiliser une visserie importante pour fixer un châssis sur la toiture et enfin fixer les modules à énergie solaire sur le châssis. Non seulement la mise en oeuvre de ce type de chantier est fastidieuse, mais en cas de pluie, l'eau qui s'infiltre entre les modules risque à la longue de pénétrer dans les orifices de perçage de la toiture et par là de créer des infiltrations jusqu'à l'intérieur des pièces.

### Description détaillée du brevet

Le présent brevet résout certains problèmes techniques rencontrés lors de l'installation de modules à énergie solaire en apportant des solutions de montage plus simple, qui en même temps améliorent l'imperméabilité générale.

Afin de résoudre lesdits problèmes techniques, le présent brevet adopte les dispositions techniques suivantes :
Les blocs d'intégration pour module à énergie solaire du présent brevet comprennent des modules à énergie solaire qui transforment l'énergie solaire en énergie électrique et des composants d'intégration. Lesdits composants d'intégration comprennent de préférence un profilé de cadre avant, un profilé de cadre arrière et deux profilés de montants latéraux de cadre, adaptés à être assemblés de manière à former un cadre rectangulaire ; à la partie supérieure et intérieure desdits profilés de cadre avant et arrière se trouve une glissière de montage pour l'insertion du module à énergie solaire ; des gorges de glissières de montage étant ainsi disposées qu'une face extérieure dudit profilé de cadre avant possède un encastrement avant orienté vers le bas, une face extérieure dudit profilé de cadre arrière possède un encastrement arrière orienté en sens inverse de l'encastrement avant, de sorte que l'encastrement avant d'un dit composant d'assemblage s'adapte de manière complémentaire à l'encastrement arrière d'un composant d'assemblage voisin.

Favorablement, une surface supérieure de la glissière de montage du profilé de cadre avant et la surface supérieure dudit encastrement avant se trouveront sur un même plan ; de même une surface supérieure de la glissière de montage dudit profilé de cadre arrière et une surface supérieure dudit encastrement arrière se trouveront sur un même plan.

Par ailleurs, parmi les composants d'intégration, on conseille qu'entre les encastrements avant et arrière qui s'emboîtent l'un dans l'autre se trouvera un joint d'étanchéité en forme de U qui bouchera les interstices.

Est également concernée une toiture comprenant plusieurs blocs d'intégration précités pour module à énergie solaire.

Parmi eux, on recommande de préférence que les encastrements arrière des profilés de cadre arrière des blocs d'intégration s'adaptent par encastrement dans les encastrements avant des profilés de cadre avant desdits blocs d'intégration voisins ; les deux profilés des montants latéraux de cadre de deux dits blocs voisins d'intégration étant réunis ensemble par un profilé de fixation et des vis.

Favorablement, le profilé de fixation comportera un corps en U et deux pattes de fixation allongées vers l'extérieur aux extrémités des montants dudit corps en U, une face intérieure desdites pattes de fixation et une partie supérieure d'une face extérieure desdits profilés de montants latéraux de cadre venant s'appuyer l'une contre l'autre. Entre lesdites pattes de fixation et une face supérieure desdits profilés de montants latéraux de cadre on conseille de placer une bande de joint d'étanchéité ; lesdites vis (40) traversant alors de préférence ledit corps en U et étant reliées à un châssis installé sur le toit.

De préférence la bande de joint d'étanchéité s'étendra jusqu'à l'extérieur desdites pattes de fixation.

Par ailleurs, on conseille que la face supérieure desdites pattes de fixation soit à pan incliné.

On recommande concernant cette toiture qu'entre lesdits encastrements avant et arrière adaptés ensemble soit placé un joint d'étanchéité en forme de U.

On favorisera en outre une solution où, dans un état assemblé, la surface supérieure d'un dit encastrement avant et la surface supérieure de la glissière d'assemblage du profilé du cadre arrière (7) se trouveront sur un même plan.

De préférence, entre les vis précitées et ledit corps en U seront placées des rondelles d'étanchéité

Ainsi que l'on peut le constater d'après tout ou partie de ces dispositions techniques, les blocs d'intégration pour module à énergie solaire visés par le présent brevet présentent les avantages et points positifs suivants :
Par la présence d'un encastrement à l'avant du profilé du cadre avant et la présence d'un encastrement à l'arrière du profilé du cadre arrière, lequel vient s'adapter dans l'encastrement suivant, lors de l'installation de plusieurs blocs d'intégration pour module à énergie solaire, d'avant en arrière, les encastrements avant et arrière voisins viennent s'imbriquer les uns dans les autres par simple pose, simplifiant de beaucoup le montage.

Par ailleurs par l'emploi d'un joint d'étanchéité adapté placé entre les encastrements avant et arrière, on obtient une étanchéité correcte contre les infiltrations d'eau de pluie notamment, assurant une bonne imperméabilité.

D'autres explications sur les principales mesures suivant, en référence aux schémas annexes donnés à titre d'exemple et d'éclaircissements à ce qui a été dit précédemment sur le présent brevet, ses divers objectifs, ses particularités et ses avantages.

### Légende des dessins annexés

Le dessin 1 représente une vue d'ensemble en coupe de la structure du bloc d'intégration pour module à énergie solaire visé par le présent brevet.

Le dessin 2 représente une vue en coupe de la structure de la jonction entre un profilé de cadre arrière et le profilé du cadre avant du module à énergie solaire voisin, dans le cas où plusieurs blocs d'intégration pour module à énergie solaire visés par le présent brevet ont été assemblés ensemble.

Le dessin 3 représente une vue en coupe de la structure de la jonction entre deux profilés de montants latéraux de deux blocs d'intégration voisins pour module à énergie solaire, dans le cas où plusieurs blocs d'intégration pour module à énergie solaire visés par le présent brevet ont été assemblés ensemble.

Le dessin 4 représente une coupe transversale du profilé du cadre avant d'un bloc d'intégration pour module à énergie solaire.

Le dessin 5 représente une coupe transversale du profilé du cadre arrière d'un bloc d'intégration pour module à énergie solaire.

Le dessin 6 représente une coupe transversale des profilés de montants latéraux du cadre d'un bloc d'intégration pour module à énergie solaire.

### Mode de réalisation illustré

Suit donc une description détaillée d'un mode de réalisation concrète du présent brevet qui vient en complément des dessins annexés. Il faut observer que les réalisations concrètes décrites ici n'ont qu'une valeur illustrative et ne limitent en rien la portée du présent brevet.

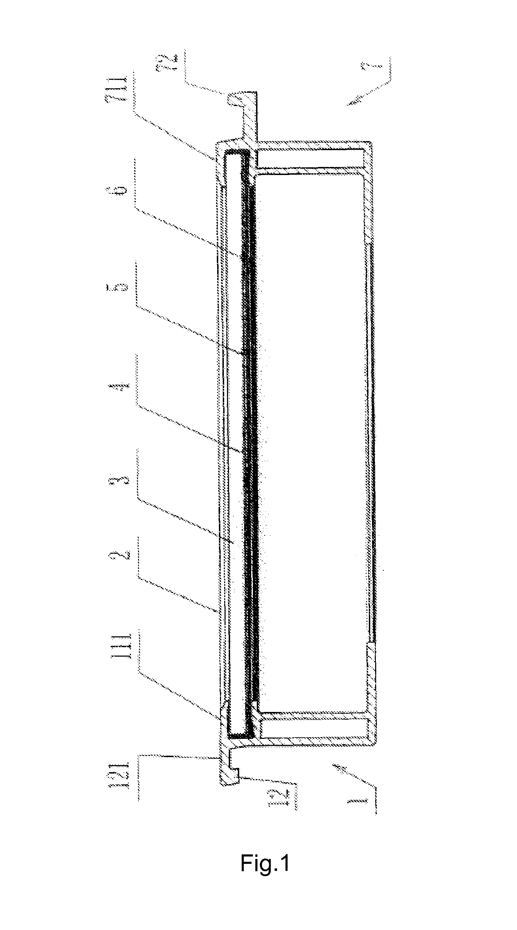

D'après ce que montrent les figures 1 à 6, un bloc d'intégration pour module à énergie solaire comprend un module solaire et des composants d'assemblage.

La structure du module à énergie solaire est similaire à la structure traditionnelle, à savoir elle comprend un verre trempé (3), une couche d'encapsulant EVA (4), des cellules photovoltaïques (5), une autre couche d'encapsulant EVA (6) et une couche arrière en « Tedlar ; TPT ».

Les composants d'assemblage comportent le profilé de cadre avant (1), le profilé de cadre arrière (7) et deux profilés pour les montants latéraux du cadre (2), lesquels composants ont capacité à être assemblés de manière à former un cadre rectangulaire. Les profilés de cadre avant, arrière et des montants latéraux peuvent être réalisés en profilé aluminium aussi bien qu'en plastique thermoformé ou en autre matériau.

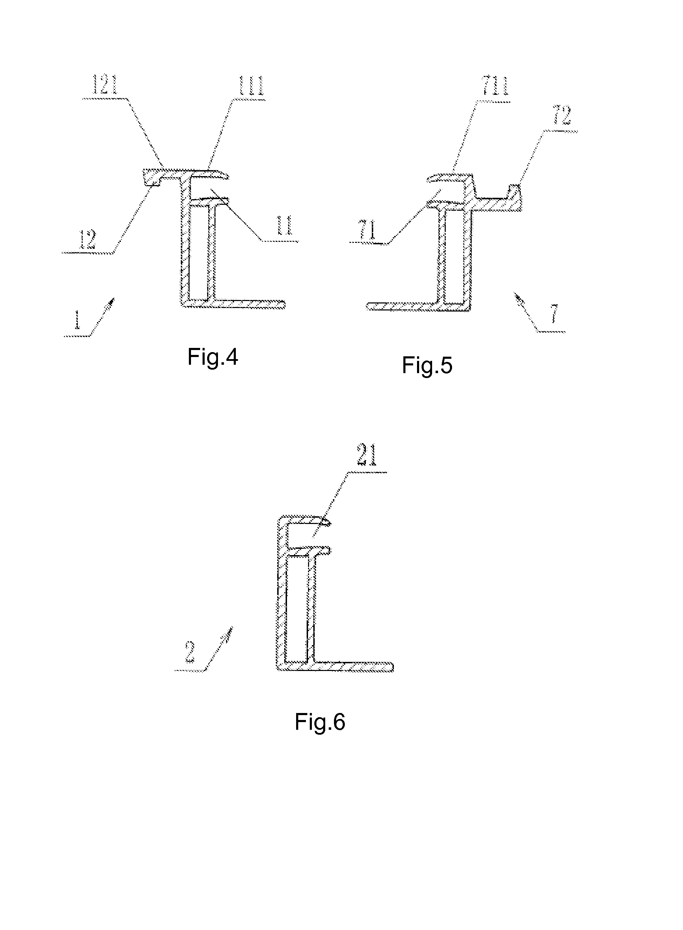

D'après ce que montre la figure 4, à la partie supérieure et intérieure du profilé de cadre avant (1) se trouve une glissière de montage (11) pour l'insertion du module à énergie solaire, tandis qu'à la partie supérieure et extérieure du profilé de cadre avant (1) se trouve un encastrement avant orienté vers le bas (12).

Au moins pour diminuer le temps d'arrêt des eaux de pluie par exemple sur le profilé du cadre avant (1), on pourra faire en sorte que la surface supérieure (111) de la glissière de montage (11) du profilé du cadre avant soit sur le même plan que la surface supérieure (121) de l'encastrement avant (12).

D'après ce que montre la figure 5, à la partie supérieure et intérieure du profilé du cadre arrière (7) se trouve une glissière de montage (71) pour le montage du module à énergie solaire et cette glissière de montage (71) se trouve exactement en vis à vis de l'ouverture de la glissière de montage (11) du profilé du cadre avant. A la partie extérieure du profilé du cadre arrière (7) se trouve un encastrement arrière orienté vers le haut (72), de sorte que l'encastrement avant (12) soit exactement orienté inversement à l'encastrement arrière (72), de manière à ce que lors de l'installation de plusieurs blocs d'intégration pour module à énergie solaire cela facilite la jonction des blocs deux par deux par encastrement.

D'après ce que montre la figure 6, à la partie supérieure et intérieure du profilé des montants latéraux du cadre (2) se trouve une glissière de montage (21) pour l'insertion du module à énergie solaire.

Dans le présent brevet, entre les encastrement avant (12) et arrière (72) qui s'emboîtent l'un dans l'autre est placé un joint d'étanchéité en U (10) qui sert à boucher les interstices de manière à permettre une imperméabilité le cas échéant.

Quant au bloc d'intégration pour module à énergie solaire du présent brevet, du fait de la présence d'un encastrement avant sur le profilé du cadre avant et sur le profilé de cadre arrière d'un encastrement arrière qui vient travailler en complémentarité de l'encastrement avant, lors de l'installation de plusieurs blocs d'intégration pour module à énergie solaire, d'avant en arrière, les encastrements avant et arrière voisins viennent s'imbriquer les uns dans les autres par simple pose, simplifiant de beaucoup le montage.

La toiture visé par le présent brevet comprend plusieurs blocs d'intégration pour module à énergie solaire visés par le présent brevet assemblés par encastrement.

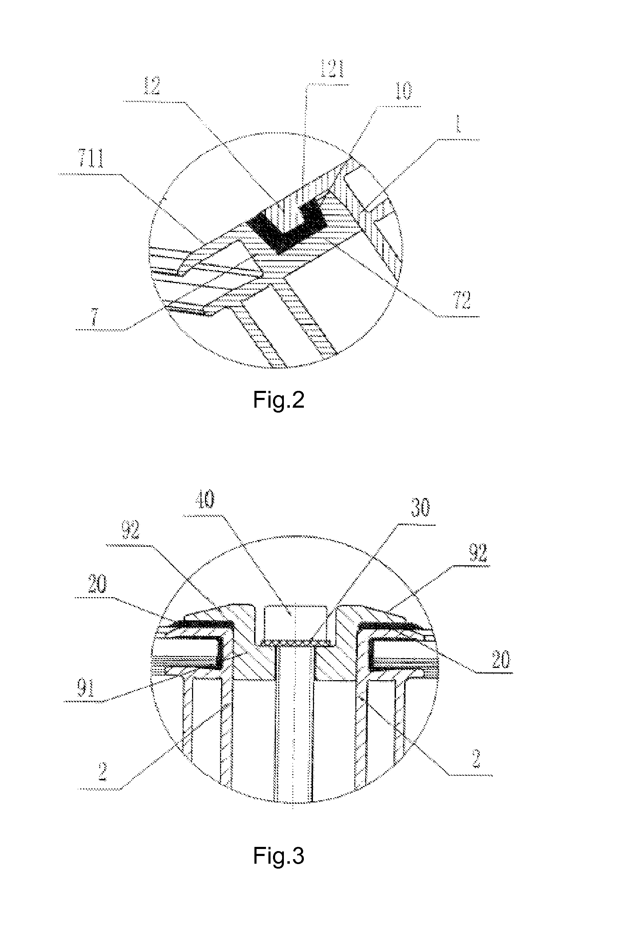

D'après ce que montrent les figures 2 et 3, lors de l'installation de plusieurs blocs d'intégration pour module à énergie solaire, l'encastrement arrière (72) du profilé de cadre arrière (7) d'un bloc d'intégration pour module à énergie solaire vient s'adapter par encastrement dans 1' encastrement avant (12) du profilé de cadre avant (1) du bloc voisin d'intégration pour module à énergie solaire et un joint d'étanchéité en U (10) est installé entre les encastrements complémentaires avant (12) et arrière (72), de manière à garantir l'étanchéité entre les encastrements avant (12) et arrière (72) et empêcher ainsi toute infiltration d'eau de pluie ou tout autre infiltration. Afin d'améliorer l'aspect esthétique et de réduire au maximum le délai d'arrêt des eaux de pluie, on fera en sorte que la surface supérieure (121) de l'encastrement avant (12) de deux blocs d'intégration pour module à énergie solaire installés ensemble et la surface supérieure (711) de la glissière de montage (71) du profilé de cadre arrière (7) se trouvent sur un même plan. Les profilés des montants latéraux (2) des cadres de deux blocs voisins d'intégration pour module à énergie solaire sont reliés ensemble par un profilé de fixation et des vis (40). Quant au profilé de fixation, on pourra utiliser une structure existante, mais dans le cas où il faut augmenter l'imperméabilité, on retiendra en priorité le profilé de fixation du présent brevet.

Comme illustré, le profilé de fixation comporte un corps en U (91) et deux pattes de fixation (92) allongées vers l'extérieur aux extrémités des montants du corps en U. La face supérieure des pattes de fixation est à pan incliné, ce qui permet d'un côté de réduire la quantité de matière et de réduire le prix de revient et d'un autre côté de faciliter l'écoulement des eaux de pluie. Le profilé de fixation peut être réalisé en caoutchouc siliconé. Lorsqu'on utilise un tel profilé de fixation pour relier les profilés des montants latéraux (2) des cadres de deux blocs voisins d'intégration pour module à énergie solaire, la face intérieure des pattes de fixation (92) et la partie supérieure de la face extérieure des profilés des montants latéraux (2) des cadres viennent s'appuyer l'une contre l'autre et entre le profilé de fixation (92) et la face supérieure des profilés des montants latéraux (2) des cadres est placée une bande de joint d'étanchéité (20) dont la coupe transversale représente un tiret; la bande de joint d'étanchéité (20) pourra s'allonger à l'extérieur des pattes de fixation (92), afin d'améliorer l'étanchéité entre les pattes de fixation (92) et les profilés des montants latéraux (2) des cadres. Des vis (40) traversent le corps en U (91) et sont reliées au châssis installé sur le toit. On pourra insérer une rondelle d'étanchéité (30) entre les vis et le corps en U (91).

Les blocs d'intégration pour module à énergie solaire utilisés par la toiture ici présentée ne sont pas seulement simples à monter, mais par le fait de la possibilité d'insérer lors du montage un profilé entre les encastrements avant (1) et arrière (7), d'insérer une rondelle d'étanchéité (30) entre les vis et le corps en U (91) du profilé de fixation et d'insérer une bande d'étanchéité (20) entre les pattes de fixation (92) du profilé de fixation et les profilés des montants latéraux (2) des cadres. Par l'utilisation de ces joints diversement placés, la toiture du présent brevet possède une bonne imperméabilité, permettant d'empêcher l'infiltration des eaux pluviales.

Les blocs d'intégration pour module à énergie solaire non seulement peuvent être utilisés dans un système photovoltaïque traditionnel, mais peuvent être utilisés sur une toiture qui doit être imperméable à la pluie sans pose d'une couche imperméable additionnelle et assurer que la toiture soit étanche.

Même si l'on a présenté ci-avant un mode de réalisation précis, on gardera à l'esprit que les termes techniques utilisés sont explicatifs et démonstratifs et non des termes techniques restrictifs. Seules les revendications définissent la portée du brevet.

## Revendications

1. Bloc d'intégration pour module à énergie solaire, ce bloc comportant un module à énergie solaire et des composants d'assemblage lesquels comprennent un profilé de cadre avant (1), un profilé de cadre arrière (7) et deux profilés de montants latéraux de cadre (2), adaptés à être assemblés de manière à former un cadre rectangulaire ; à la partie supérieure et intérieure desdits profilés de cadre avant (1) et arrière (7) se trouve une glissière de montage (11) pour l' insertion du module à énergie solaire ; des gorges (71) de glissières de montage (11) étant ainsi disposées qu'une face extérieure dudit profilé de cadre avant (1) possède un encastrement avant (12) orienté vers le bas, une face extérieure dudit profilé de cadre arrière (2) possède un encastrement arrière (72) orienté en sens inverse de l'encastrement avant (12), de sorte que l'encastrement avant (12) d'un dit composant d'assemblage s'adapte de manière complémentaire à l'encastrement arrière (72) d'un composant d'assemblage voisin.

2. Bloc d'intégration pour module à énergie solaire conforme à la revendication 1, **caractérisé en ce qu'**une surface supérieure (111) de la glissière (11) de montage dudit profilé de cadre avant (1) et la surface supérieure (121) dudit encastrement avant (12) se trouvent sur un même plan ; de même une surface supérieure (711) de la glissière de montage (71) dudit profilé de cadre arrière (7) et une surface supérieure (721) dudit encastrement arrière (72) se trouvent sur un même plan.

3. Bloc d'intégration pour module à énergie solaire conforme aux revendications 1 ou 2, **caractérisé en ce qu'**entre lesdits encastrements avant (12) et arrière (72) qui s'emboîtent l'un dans l'autre se trouve un joint d'étanchéité (10) en forme de U qui bouche les interstices.

4. Toiture **caractérisée en ce qu'**elle comprend plusieurs blocs d'intégration pour module à énergie solaire conforme aux revendications 1,2 ou 3 où les encastrements arrière (72) des profilés de cadre arrière (7) des blocs d'intégration s'adaptent par encastrement dans les encastrements avant (12) des profilés de cadre avant (1) desdits blocs d'intégration voisins ; les deux profilés des montants latéraux (2) de cadre de deux dits blocs voisins d'intégration étant réunis ensemble par un profilé de fixation et des vis (40).

5. Toiture conforme à la revendication 4, **caractérisée en ce que** ledit profilé de fixation comporte un corps en U (91) et deux pattes de fixation (92) allongées vers l'extérieur aux extrémités des montants dudit corps en U (91), une face intérieure desdites pattes de fixation (92) et une partie supérieure d'une face extérieure desdits profilés de montants latéraux (2) de cadre venant s'appuyer l'une contre l'autre ; et, entre lesdites pattes de fixation (92) et une face supérieure desdits profilés de montants latéraux (2) de cadre est placée une bande de joint d'étanchéité (20) ; lesdites vis (40) traversant ledit corps en U (91) et étant reliées à un châssis installé sur le toit.

6. Toiture conforme à la revendication 5, **caractérisée en ce que** la bande de joint d'étanchéité (20) s'étend jusqu'à l'extérieur desdites pattes de fixation (92).

7. Toiture conforme à la revendication 5, **caractérisée en ce que** la face supérieure desdites pattes de fixation (92) est à pan incliné.

8. Toiture conforme à l'une au moins des revendications 4 à 7 , **caractérisée en ce qu'**entre lesdits encastrements avant (12) et arrière (72) adaptés ensemble est placé un joint d'étanchéité en forme de U (10).

9. Toiture conforme à l'une au moins des revendications 4 à 7 , **caractérisée en ce que** dans un état assemblé, la surface supérieure (121) d'un dit encastrement avant (12) et la surface supérieure de la glissière d'assemblage (71) dudit profilé du cadre arrière (7) se trouvent sur un même plan.

10. Toiture conforme à l'une au moins des revendications 4 à 7 , **caractérisée en ce qu'**entre lesdites vis (40) et ledit corps en U (91) sont placées des rondelles d'étanchéité (30).
